# FASCICULE DE BREVET EUROPEEN

(11) **EP 3 833 862 B1**
(45) Date de publication et mention de la délivrance du brevet: **01.01.2025**
(21) Numéro de dépôt: 19759668.7
(22) Date de dépôt: 06.08.2019
(51) Int. Cl.: F01D 25/12, F01D 25/14, F01D 25/20, F02K 3/115, F02C 7/14, F02C 7/18

(54) **CIRCUIT DE LUBRIFICATION OU DE REFROIDISSEMENT D'UN ORGANE MOTEUR D'UN AÉRONEF ET MOTEUR PROPULSIF D'AÉRONEF ÉQUIPÉ D'UN TEL CIRCUIT**
SCHMIER- ODER KÜHLKREIS EINER ANTRIEBSEINHEIT EINES FLUGZEUGS UND FLUGZEUGMOTOR MIT EINEM SOLCHEN KÜHLKREIS
LUBRICATION OR COOLING CIRCUIT OF A DRIVE UNIT OF AN AIRCRAFT AND AIRCRAFT PROPULSION ENGINE PROVIDED WITH SUCH A CIRCUIT

(30) Priorité: 10.08.2018 FR 1870922
(43) Date de publication de la demande: 16.06.2021
(73) Titulaire: Liebherr-Aerospace Toulouse SAS, 31200 Toulouse (FR)
(72) Inventeur: FAYOLLE, Laurent, 31016 TOULOUSE Cedex 2 (FR); GALZIN, Guillaume, 31016 TOULOUSE Cedex 2 (FR)
(74) Mandataire: Bringer IP
(86) Numéro de dépôt international: PCT/FR2019/051906
(87) Numéro de publication internationale: WO 2020/030874

(56) Documents cités:
- WO-A2-2014/130103
- FR-A1- 3 008 173
- US-A1- 2006 042 225
- US-A1- 2008 095 611

## Description

### 1. Domaine technique de l'invention

L'invention concerne un système de refroidissement d'un fluide de lubrification ou de refroidissement d'un organe d'un moteur propulsif d'un aéronef. L'invention concerne également un moteur propulsif d'un aéronef équipé d'un tel système de refroidissement d'un fluide (de lubrification ou de refroidissement), désigné ci-après, par les termes de circuit de fluide.

### 2. Arrière-plan technologique

Il est connu qu'un moteur propulsif d'un aéronef, quel que soit son type (turbine à gaz, moteur électrique, etc.) doit prévoir un système de lubrification de ses différents composants (paliers, butées, engrenages, boites accessoires, boitier de réduction, etc.). Il est fréquent qu'un tel système de lubrification mette en oeuvre un fluide du type huile de lubrification, aussi désignée par les termes d'huile moteur. Cette huile moteur doit être refroidie pour permettre l'évacuation des calories absorbées au cours de son passage dans les différents composants lubrifiés.

Il est également connu qu'un certain nombre d'organes d'un moteur propulsif doit être refroidi par un circuit de refroidissement. Par exemple, dans le cas d'un moteur propulsif électrique, il peut s'agir de la génératrice électrique ou du starter de cette génératrice. Un tel circuit de refroidissement met en général en oeuvre un fluide de refroidissement qui est mis en contact avec les organes à refroidir pour absorber les calories évacuées par ces organes. Le fluide de ce circuit de refroidissement doit être refroidi pour pouvoir assurer sa fonction de refroidissement.

Ainsi, la plupart des aéronefs sont équipés d'un système de refroidissement d'un fluide (qui est en général une huile pour un circuit de lubrification et un fluide caloporteur pour un circuit de refroidissement) qui comprend en général des échangeurs de chaleur à ailettes refroidis soit par un prélèvement d'air sur l'écoulement secondaire du moteur, plus connu sous la dénomination de fan air, d'air fan ou de « by-pass air », soit en plongeant les ailettes des échangeurs de chaleur directement dans le flux d'air de cet écoulement secondaire.

Le prélèvement d'air sur l'écoulement secondaire réduit les performances énergétiques du moteur en augmentant la consommation de carburant du moteur. L'agencement des ailettes directement dans le flux d'air fan crée des pertes de charges et des perturbations d'écoulement d'air, ce qui réduit la poussée du moteur.

Dans un moteur aéronautique à très fort taux de dilution, les pertes de charges et les perturbations d'écoulement sur l'air fan ne sont plus acceptables, car elles réduisent fortement la poussée du moteur. En outre, l'impact négatif d'un prélèvement d'air sur la consommation de kérosène du moteur est bien supérieur à celle d'un moteur aéronautique classique. En outre, le volume disponible pour le système de refroidissement est diminué par rapport à celui d'un moteur aéronautique classique.

Pour un moteur aéronautique comprenant une boite de réduction, la puissance chaude transmise à l'huile de lubrification est beaucoup plus élevée que sur un moteur aéronautique classique (de l'ordre de 3 fois plus élevée), ce qui nécessite de sur dimensionner le système de refroidissement de l'huile.

Il existe donc un besoin de disposer d'un nouveau système de refroidissement d'huile moteur qui puisse être mis en oeuvre à la fois sur les moteurs aéronautiques standards que sur les moteurs propulsifs à fort taux de dilution.

Il existe également un besoin de disposer d'un nouveau système de refroidissement d'un fluide d'un circuit de refroidissement d'un organe moteur, tel que par exemple une génératrice électrique et d'une manière générale de tout organe moteur à refroidir.

### 3. Objectifs de l'invention

L'invention vise donc à fournir un système et un procédé de refroidissement d'un fluide d'un circuit de lubrification ou de refroidissement d'un fluide, dit circuit de fluide, d'un organe d'un moteur propulsif d'un aéronef qui pallient au moins certains des inconvénients des systèmes et procédés connus.

L'invention vise en particulier à fournir, dans au moins un mode de réalisation, un système et un procédé de refroidissement d'un fluide d'un circuit de fluide qui ne pénalisent ni la consommation de carburant ni la poussée du moteur.

L'invention vise en particulier à fournir, dans au moins un mode de réalisation, un système de refroidissement d'un fluide d'un circuit de fluide qui présente un encombrement réduit par rapport aux systèmes connus.

L'invention vise aussi à fournir, dans au moins un mode de réalisation, un système et un procédé de refroidissement d'un fluide d'un circuit de fluide qui contribuent à améliorer la poussée du moteur propulsif.

L'invention vise aussi à fournir, dans au moins un mode de réalisation, un système et un procédé de refroidissement d'un fluide d'un circuit de fluide qui sont particulièrement adaptés aux moteurs aéronautiques à fort taux de dilution et/ou à boite de réduction.

L'invention vise aussi à fournir, dans au moins un mode de réalisation, un système et un procédé de refroidissement d'un fluide d'un circuit de fluide qui permettent un meilleur refroidissement du fluide de lubrification que les systèmes et procédés connus.

D'autres objectifs de l'invention ressortiront également de la description qui suit et des différents modes de réalisation décrits.

Les documents WO 2014/130103 A2, US 2006/0042225 A1 et US 2008/0095611 A1 décrivent des circuits de fluide des turboréacteurs de l'art antérieur.

### 4. Exposé de l'invention

Pour ce faire, l'invention concerne un circuit de lubrification ou de refroidissement selon la revendication 1.

Un système selon l'invention permet donc de refroidir le fluide du circuit de fluide (qui est soit un fluide de lubrification d'au moins un organe moteur, soit un fluide de refroidissement d'au moins un organe moteur) par l'intermédiaire d'un échangeur de peau lisse, qui ne comprend aucune ailette plongée dans le flux d'air secondaire, qui est logé entre la soufflante et les bras redresseurs, et qui permet des échanges thermiques entre le fluide du circuit de fluide et l'air de l'écoulement secondaire, sans perturber le flux d'air secondaire, ni pénaliser la consommation de carburant.

L'échangeur de peau est agencé entre la soufflante et les bras redresseurs du moteur, c'est-à-dire dans une zone du moteur où l'écoulement d'air est fortement perturbé. Cet agencement avantageux de l'échangeur de peau entre les pales de la soufflante et celles du redresseur, permet de bénéficier de la forte turbulence de l'écoulement d'air dans cette zone, ce qui augmente les échanges thermiques et donc la capacité de refroidissement de l'échangeur.

Un système selon l'invention permet également de refroidir le fluide de lubrification ou de refroidissement dès que le moteur fonctionne, y compris lorsque l'aéronef présente une vitesse faible, voire une vitesse nulle.

Les échanges thermiques entre le fluide de lubrification ou de refroidissement et le flux d'air du canal secondaire ont pour conséquence d'augmenter la température de l'air du flux secondaire en aval de l'échangeur de peau, ce qui contribue à améliorer la poussée du moteur propulsif.

Un système selon l'invention permet donc non seulement de réduire les impacts du système de refroidissement sur la performance et la consommation de carburant du moteur, mais également d'augmenter la poussée du moteur, tout en augmentant la capacité de refroidissement du fluide.

Un tel système est donc particulièrement avantageux pour les nouveaux moteurs aéronautiques à très forts taux de dilution et/ou à boite de réduction.

Avantageusement et selon l'invention, l'échangeur de peau est courbe.

Un tel échangeur permet donc d'épouser la forme de la paroi intérieure du carter extérieur du moteur.

Le carter extérieur d'un moteur propulsif est en général formé par un corps annulaire extérieur dans lequel est logé la soufflante, relié à un deuxième corps annulaire extérieur dans lequel est logé la turbomachine portée par les bras redresseurs, lui-même relié à une nacelle. Dans tout le texte qui suit, le terme nacelle désigne, par abus de langage, le carter extérieur du moteur propulsif qui s'étend de la bouche d'entrée d'air à la tuyère d'éjection.

Avantageusement et selon cette variante, ledit échangeur de peau s'étend sur toute la périphérie de ladite paroi intérieure dudit carter extérieur.

Cette variante avantageuse permet de maximiser les échanges thermiques en prévoyant un échangeur de peau courbe qui s'étend sur toute la périphérie de la paroi intérieure dudit carter extérieur, entre la bouche d'entrée d'air et les bras redresseurs.

Avantageusement et selon l'invention, ledit circuit de fluide est un circuit de lubrification, ledit fluide est une huile de lubrification et ledit échangeur de peau comprend des canaux de circulation de cette huile de lubrification.

Selon une autre variante, ledit circuit de fluide est un circuit de refroidissement, ledit fluide est un fluide de refroidissement et ledit échangeur de peau comprend des canaux de circulation de ce fluide de refroidissement.

L'invention concerne également un moteur propulsif d'un aéronef comprenant un carter extérieur qui s'étend selon une direction longitudinale entre une bouche d'entrée d'air et une tuyère d'éjection, une turbomachine comprenant un carter de turbomachine fixé à l'intérieur dudit carter extérieur par des bras redresseurs, une soufflante agencée au niveau de ladite bouche d'entrée d'air dudit carter extérieur, en amont de ladite turbomachine, configurée pour pouvoir générer un flux d'air primaire alimentant ladite turbomachine et un flux d'air secondaire alimentant un canal, dit canal secondaire, formé entre ledit carter extérieur et ledit carter de turbomachine.

Un moteur propulsif selon l'invention est caractérisé en ce qu'il comprend en outre un circuit de lubrification ou de refroidissement selon l'invention.

Les avantages d'un circuit de lubrification ou de refroidissement d'un organe moteur selon l'invention s'appliquent donc mutatis mutandis à un moteur propulsif selon l'invention.

L'invention concerne également un aéronef comprenant au moins un moteur propulsif selon l'invention.

L'invention concerne également un procédé selon la revendication 8 de refroidissement d'un fluide d'un circuit de lubrification ou de refroidissement d'au moins un organe d'un moteur propulsif d'un aéronef comprenant un carter extérieur qui s'étend selon une direction longitudinale entre une bouche d'entrée d'air et une tuyère d'éjection, une turbomachine comprenant un carter de turbomachine fixé à l'intérieur dudit carter extérieur par des bras redresseurs, et une soufflante agencée au niveau de ladite bouche d'entrée d'air dudit carter extérieur, en amont de ladite turbomachine, et configurée pour pouvoir générer un flux d'air primaire alimentant ladite turbomachine et un flux d'air secondaire alimentant un canal, dit canal secondaire, formé entre ledit carter extérieur et ledit carter de turbomachine.

Un procédé selon l'invention est caractérisé en ce qu'il comprend :
- l'agencement de l'échangeur de peau du circuit de fluide sur une paroi intérieure dudit carter extérieur, longitudinalement entre ladite soufflante et lesdits bras redresseurs,
- la mise en communication fluidique dudit échangeur de peau avec ledit circuit de fluide pour pouvoir assurer des échanges thermiques entre ledit fluide dudit circuit de fluide et l'air circulant dans ledit canal secondaire.

En outre, les avantages d'un système de refroidissement selon l'invention s'appliquent mutatis mutandis à un procédé de refroidissement selon l'invention.

En particulier, un procédé selon l'invention permet d'assurer un refroidissement d'un fluide d'un circuit de lubrification ou de refroidissement par l'installation d'un échangeur de peau entre la soufflante nacelle et les bras redresseurs du moteur. C'est cet agencement spécifique, dans une zone du moteur où l'écoulement d'air est fortement perturbé, qui permet d'améliorer sensiblement les échanges thermiques entre l'air fan et le fluide de lubrification ou de refroidissement, et donc son refroidissement.

En outre, le procédé de refroidissement selon l'invention contribue à améliorer la poussée du moteur propulsif, étant donné que les échanges thermiques entre le fluide du circuit de fluide et le flux d'air du canal secondaire conduisent à augmenter la température de l'air du flux secondaire en aval de l'échangeur de peau.

Avantageusement et selon l'invention, ladite étape d'agencement de l'échangeur de peau sur la paroi intérieure dudit carter extérieur consiste à agencer ledit échangeur de peau sur toute la périphérie de ladite paroi intérieure dudit carter extérieur.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- [Fig 1] est une vue schématique en perspective coupe d'un moteur propulsif selon un mode de réalisation de l'invention comprenant un système de refroidissement selon un mode de réalisation de l'invention,
- [Fig 2] est une vue schématique d'un échangeur de peau d'un système de refroidissement selon un mode de réalisation de l'invention,
- [Fig 3] est une vue schématique d'un circuit de lubrification d'un moteur propulsif selon un mode de réalisation de l'invention.

### 6. Description détaillée d'un mode de réalisation de l'invention

Sur les figures, les échelles et les proportions ne sont pas strictement respectées et ce, à des fins d'illustration et de clarté.

La direction longitudinale correspond à la direction principale du moteur propulsif qui est la direction suivie par l'air de la bouche d'entrée d'air dans la nacelle à la tuyère d'éjection des gaz.

Le terme radial est utilisé par rapport à l'axe X de symétrie du moteur propulsif qui s'étend le long de la direction longitudinale.

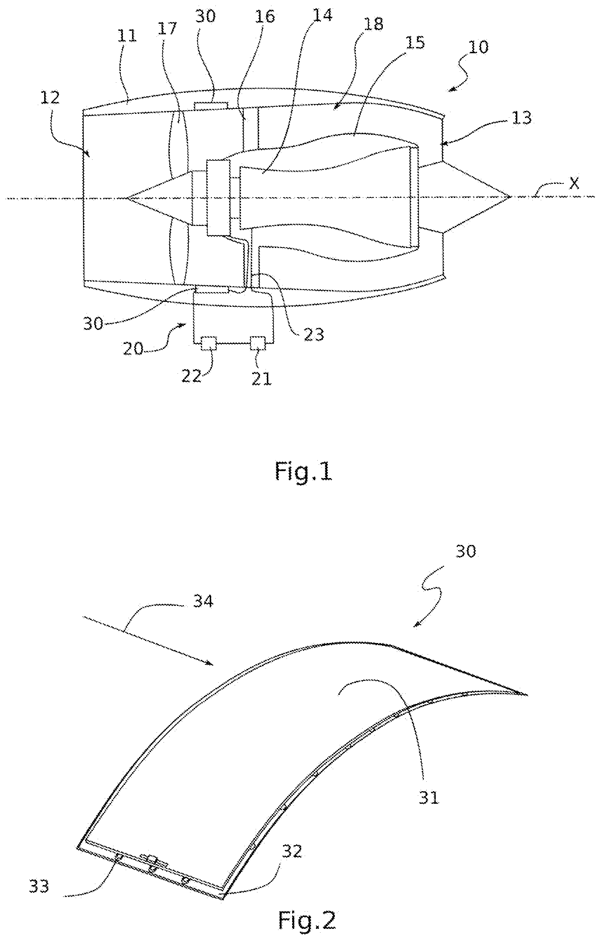

La figure 1 illustre schématiquement un moteur propulsif 10 d'un aéronef comprenant un carter extérieur 11 qui s'étend selon un axe X longitudinal entre une bouche d'entrée d'air 12 et une tuyère d'éjection 13.

En outre, une turbomachine 14 comprend un carter 15 de turbomachine fixé à l'intérieur dudit carter extérieur 11 par des bras redresseurs 16. Cette turbomachine 14 peut être de tous types. Il peut par exemple s'agir d'un turbomoteur comprenant une turbine à gaz.

Une soufflante 17 est agencée au niveau de la bouche d'entrée d'air 12.

Cette soufflante permet de générer un flux d'air primaire qui alimente la turbomachine 14 et un flux d'air secondaire qui alimente un canal secondaire 18, formé entre le carter extérieur 11 et le carter 15 de turbomachine.

La figure 1 illustre également un circuit de lubrification 20 selon un mode de réalisation de l'invention comprenant un réservoir d'huile de lubrification 21, une pompe 22 et une pluralité de conduites 23 de circulation de l'huile de lubrification entre le réservoir d'huile et les organes du moteur à lubrifier, tels que des paliers, butées, engrenages, boites accessoires, boitier de réduction, non représentés sur la figure 1 à des fins de clarté. Sur la figure 1, le circuit de lubrification 20 est représenté de manière très schématique à des fins de clarté. En particulier, les conduites à l'intérieur du turbomoteur 14 ne sont pas représentées.

Selon d'autres variantes, le circuit de fluide peut être un circuit de refroidissement d'au moins un organe moteur. L'architecture d'un tel circuit de refroidissement est mutatis mutandis identique à celle décrite en lien avec les figures décrivant l'application de l'invention à un circuit de lubrification d'organes moteurs.

Le circuit de lubrification 20 comprend un système de refroidissement de l'huile de lubrification comprenant un échangeur de peau 30 agencé sur la paroi intérieure du carter extérieur 11, entre la soufflante 17 et les bras redresseurs 16.

Cet échangeur de peau 30 est configuré pour pouvoir assurer des échanges thermiques entre le fluide de lubrification circulant dans les conduites 23 et l'air circulant dans ledit canal secondaire 18.

Cet échangeur de peau 30 peut être de tous types connus. Il est formé, tel que représenté sur la figure 2, à partir de deux feuilles métalliques 31, 32 en regard l'une de l'autre qui délimitent entre elles des canaux de circulation 33 de l'huile de lubrification et dont une des deux feuilles, dite feuille d'interface, est destinée à s'étendre sur la périphérie de la paroi intérieure du carter extérieur.

Une fois agencé en périphérie de la paroi intérieure du carter extérieur qui définit la paroi extérieure de la veine d'air du canal secondaire 18, l'air propulsé par la soufflante 17 dans le canal secondaire, représenté schématiquement par la flèche 34 sur la figure 2, vient en contact avec les canaux 33, ce qui permet des échanges thermiques avec l'huile de lubrification qui circule dans ces canaux 33.

Bien entendu, l'échangeur de peau peut présenter d'autres architectures, notamment en ce qui concerne la circuiterie des canaux de circulation du fluide.

Ainsi, l'échangeur de peau peut être l'échangeur décrit dans la demande de brevet FR3008173 au nom du demandeur.

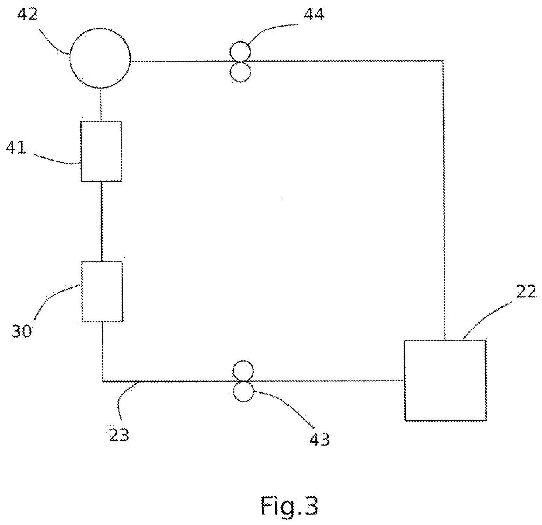

La figure 3 illustre schématiquement un circuit de lubrification selon un mode de réalisation de l'invention équipé d'un système de refroidissement selon un mode de réalisation.

Le circuit de lubrification 20 comprend un réservoir d'huile 22 configuré pour pouvoir délivrer une huile à une température, qui est par exemple comprise dans entre 100°C et 160°C.

Le circuit selon le mode de réalisation de la figure 3 comprend également une pompe de gavage 43 permettant de pomper l'huile du réservoir 22 vers les canaux de circulation d'huile de l'échangeur de peau 30.

Le refroidissement de l'huile du circuit de lubrification 20 est assuré par un échangeur de peau 30 agencé sur une paroi intérieure du carter extérieur du moteur propulsif, entre la soufflante et les bras redresseurs du moteur. Cet échangeur de peau permet donc de refroidir l'huile reçue du réservoir par des échanges thermiques avec l'air circulant dans le canal secondaire du moteur. L'air circulant dans le canal secondaire atteint une température de l'ordre de 80°C, de sorte qu'en sortie d'échangeur de peau 30, l'huile est refroidie à une température comprise entre 90°C et 150°C, selon la température de l'huile en amont de l'échangeur de peau.

Selon le mode de réalisation de la figure 3, le refroidissement de l'huile peut également être assuré par un échangeur de chaleur huile/carburant 41 additionnel, plus connu sous l'acronyme anglais FCOC pour *« Fuel Cooled Oil Cooler ».* Le carburant qui entre dans l'échangeur de chaleur atteint une température comprise entre 40°C et 60°C de sorte que l'huile en sortie d'échangeur est refroidie à une température comprise entre 70°C et 120°C, selon la température de l'huile en aval de l'échangeur de peau.

L'huile de lubrification peut ensuite être injectée dans un organe 42 du moteur à lubrifier. Il peut s'agir d'une boite de transmission de puissance, d'un palier, d'une butée, d'un engrenage, d'une boite accessoire et d'une manière générale de tout organe à lubrifier (ou à refroidir dans le cas de l'application de l'invention à un circuit de refroidissement d'un fluide de refroidissement).

L'huile en sortie de ces éléments lubrifiés atteint une température comprise entre 100 °C et 140°C et est réinjectée dans le réservoir 22 d'huile par l'intermédiaire d'une pompe d'extraction 44.

Bien entendu, les niveaux de température de l'huile de lubrification ne sont donnés qu'à titre d'illustration et dépendent de l'huile de lubrification considérée, de la circuiterie de l'échangeur de peau, des conditions de vol qui déterminent la température de l'air circulant dans le canal secondaire et des organes 42 lubrifiés.

Le circuit de lubrification peut également comprendre un échangeur de chaleur huile/air, plus connu sous l'acronyme ACOC pour « *Air-Cooled Oil Cooler »* qui permet de refroidir l'huile par des échanges de chaleur avec l'air prélevé dans le canal secondaire à une température de 120°C. Cette huile peut ensuite être injectée dans une turbomachine pour atteindre en sortie une température de 180°C, et rejoindre le réservoir d'huile.

## Revendications

1. Circuit de lubrification ou de refroidissement, dit circuit de fluide (20), d'au moins un organe (42) d'un moteur propulsif (10) d'un aéronef comprenant un carter extérieur (11) qui s'étend selon une direction longitudinale (X) entre une bouche d'entrée d'air (12) et une tuyère d'éjection (13), une turbomachine (14) comprenant un carter de turbomachine (15) fixé à l'intérieur dudit carter extérieur (11) par des bras redresseurs (16) et une soufflante (17) agencée au niveau de ladite bouche d'entrée d'air (12) dudit carter extérieur (11), en amont de ladite turbomachine (14), configurée pour pouvoir générer un flux d'air primaire alimentant ladite turbomachine (14) et un flux d'air secondaire alimentant un canal, dit canal secondaire (18), formé entre ledit carter extérieur (11) et ledit carter de turbomachine (15) ; ledit circuit de fluide (20) étant **caractérisé en ce qu'**il comprend :
- un réservoir (22) de fluide de lubrification ou de refroidissement,
- ledit au moins un organe (42) dudit moteur à lubrifier et/ou refroidir,
- au moins une conduite de circulation (23) de fluide reliant ledit réservoir (22) de fluide et ledit au moins un organe (42), dudit moteur (10), à lubrifier et/ou refroidir,
- un système de refroidissement dudit fluide comprenant un échangeur thermique lisse, dit échangeur de peau (30), formé à partir de deux feuilles métalliques (31, 32) en regard l'une de l'autre et délimitant entre elles des canaux de circulation (33) dudit fluide et dont l'une des feuilles, dite feuille d'interface, est destinée à s'étendre sur la périphérie de la paroi intérieure du carter extérieur (11) de sorte que ledit échangeur de peau ne comprenne aucune ailette plongée dans ledit flux d'air secondaire et soit configuré pour être agencé sur une paroi intérieure dudit carter extérieur; ledit échangeur de peau (30) étant configuré pour être en communication fluidique avec ledit circuit (20) de fluide et configuré pour pouvoir assurer des échanges thermiques entre ledit fluide dudit circuit (20) de fluide et l'air circulant dans ledit canal secondaire (18),
le circuit de fluide (20) étant **caractérisé en ce que** l'échangeur (30) est configuré pour être agencé longitudinalement entre ladite soufflante (17) et lesdits bras redresseurs (16).

2. Circuit de fluide (20) selon la revendication 1, **caractérisé en ce que** ledit échangeur de peau (30) dudit système de refroidissement est courbe.

3. Circuit de fluide (20) selon l'une des revendications 1 ou 2, **caractérisé en ce que** ledit échangeur de peau (30) s'étend sur toute la périphérie de ladite paroi intérieure dudit carter extérieur (11).

4. Circuit de fluide (20) selon l'une des revendications 1 à 3, **caractérisé en ce que** ledit circuit (20) de fluide est un circuit de lubrification, ledit fluide est une huile de lubrification et ledit échangeur de peau (30) comprend des canaux de circulation (33) de cette huile de lubrification.

5. Circuit de fluide (20) selon l'une des revendications 1 à 3, **caractérisé en ce que** ledit circuit (20) de fluide est un circuit de refroidissement, ledit fluide est un fluide de refroidissement et ledit échangeur de peau (30) comprend des canaux de circulation (33) de ce fluide de refroidissement.

6. Moteur propulsif (10) d'un aéronef comprenant un carter extérieur (11) qui s'étend selon une direction longitudinale (X) entre une bouche d'entrée d'air (12) et une tuyère d'éjection (13), une turbomachine (14) comprenant un carter (15) de turbomachine fixé à l'intérieur dudit carter extérieur (11) par des bras redresseurs (16), une soufflante (17) agencée au niveau de ladite bouche d'entrée d'air (12) dudit carter extérieur, en amont de ladite turbomachine (14), configurée pour pouvoir générer un flux d'air primaire alimentant ladite turbomachine et un flux d'air secondaire alimentant un canal, dit canal secondaire (18), formé entre ledit carter extérieur (11) et ledit carter (15) de turbomachine (14), **caractérisé en ce qu'**il comprend en outre un circuit de fluide (20) selon l'une des revendications 1à 5.

7. Aéronef comprenant au moins un moteur propulsif, **caractérisé en ce que** ledit moteur propulsif est un moteur selon la revendication 6.

8. Procédé de refroidissement et/ou de lubrification d'un fluide d'un circuit de lubrification ou de refroidissement, selon la revendication 1,
dit circuit de fluide (20), d'un organe (42) d'un moteur propulsif (10) d'un aéronef comprenant un carter extérieur (11) qui s'étend selon une direction longitudinale (X) entre une bouche d'entrée d'air (12) et une tuyère d'éjection (13), une turbomachine (14) comprenant un carter (15) de turbomachine fixé à l'intérieur dudit carter extérieur (11) par des bras redresseurs (16), et une soufflante (17) agencée au niveau de ladite bouche d'entrée d'air (12) dudit carter extérieur (11), en amont de ladite turbomachine (14), et configurée pour pouvoir générer un flux d'air primaire alimentant ladite turbomachine et un flux d'air secondaire alimentant un canal, dit canal secondaire (18), formé entre ledit carter extérieur (11) et ledit carter (15) de turbomachine,
**caractérisé en ce que** ledit procédé comprend :
- l'agencement de l'échangeur de peau (30) dudit circuit de fluide (20) sur une paroi intérieure dudit carter extérieur (11), longitudinalement entre ladite soufflante (17) et lesdits bras redresseurs (16),
- la mise en communication fluidique dudit échangeur de peau (30) avec ledit circuit de fluide (20) pour pouvoir assurer des échanges thermiques entre ledit fluide du circuit de fluide (20) et l'air circulant dans ledit canal secondaire (18).

9. Procédé selon la revendication 8, **caractérisé en ce que** ladite étape d'agencement de l'échangeur de peau sur la paroi intérieure dudit carter extérieur consiste à agencer ledit échangeur de peau sur toute la périphérie de ladite paroi intérieure dudit carter extérieur.

## Patentansprüche

1. Schmier- oder Kühlkreislauf, so genannter Fluidkreislauf (20), mindestens eines Bauteils (42) eines Antriebsmotors (10) eines Luftfahrzeugs mit einem Außengehäuse (11), das sich in einer Längsrichtung (X) zwischen einer Lufteinlassöffnung (12) und einer Ausstoßdüse (13) erstreckt, einer Turbomaschine (14) mit einem Turbomaschinengehäuse (15), das durch Gleichrichterarme (16) an der Innenseite des Außengehäuses (11) befestigt ist, und einem Gebläse (17), das an der Lufteinlassöffnung (12) des Außengehäuses (11) stromaufwärts der Turbomaschine (14) angeordnet und ausgestaltet ist, einen Primärluftstrom, der die Turbomaschine (14) versorgt, und einen Sekundärluftstrom, der einen Kanal, den sogenannten Sekundärkanal (18), versorgt, der zwischen dem Außengehäuse (11) und dem Turbomaschinengehäuse (15) ausgebildet ist, zu erzeugen; worin der Fluidkreislauf (20) **dadurch gekennzeichnet ist, dass** er umfasst:
ein Fluidreservoir (22) für Schmier- oder Kühlfluid, worin das mindestens eine Bauteil (42) des Motors geschmiert und/oder gekühlt werden muss,
mindestens eine Fluidzirkulationsleitung (23), die das Fluidreservoir (22) und das mindestens eine Bauteil (42) des Motors (10) verbindet, das geschmiert und/oder gekühlt werden muss,
ein System zur Kühlung des Fluids, das einen glatten Wärmetauscher, Hauttauscher (30) genannt, umfasst, der ausgehend von zwei Metallfolien (31, 32) gebildet wird, die einander gegenüberliegen und zwischen sich Zirkulationskanäle (33) des Fluids begrenzen, und von denen eine der Folien, die sogenannte Schnittstellenfolie, dazu bestimmt ist, sich über den Umfang der Innenwand des Außengehäuses (11) zu erstrecken, so dass der Hauttauscher keine in den Sekundärluftstrom eingetauchte Rippe umfasst und ausgestaltet ist, an einer Innenwand des Außengehäuses angeordnet werden zu können; worin der Hauttauscher (30) ausgestaltet ist, in Fluidverbindung mit dem Fluidkreislauf (20) zu stehen und ausgestaltet ist, in der Lage zu sein, einen Wärmeaustausch zwischen dem Fluid des Fluidkreislaufs (20) und der in dem Sekundärkanal (18) strömenden Luft sicherzustellen, worin der Fluidkreislauf (20) **dadurch gekennzeichnet ist, dass** der Tauscher (30) ausgestaltet ist, in Längsrichtung zwischen dem Gebläse (17) und den Gleichrichterarmen (16) angeordnet zu sein.

2. Fluidkreislauf (20) nach Anspruch 1, **dadurch gekennzeichnet, dass** der Hauttauscher (30) des Kühlsystems gekrümmt ist.

3. Fluidkreislauf (20) nach einem der Ansprüche 1 oder 2, **dadurch gekennzeichnet, dass** sich der Hauttauscher (30) über den gesamten Umfang der Innenwand des Außengehäuses (11) erstreckt.

4. Fluidkreislauf (20) nach einem der Ansprüche 1 bis 3, **dadurch gekennzeichnet, dass** der Fluidkreislauf (20) ein Schmierkreislauf ist, das Fluid ein Schmieröl ist und der Hauttauscher (30) Zirkulationskanäle (33) für dieses Schmieröl umfasst.

5. Fluidkreislauf (20) nach einem der Ansprüche 1 bis 3, **dadurch gekennzeichnet, dass** der Fluidkreislauf (20) ein Kühlkreislauf ist, das Fluid ein Kühlfluid ist und der Hauttauscher (30) Zirkulationskanäle (33) für dieses Kühlfluid umfasst.

6. Antriebsmotor (10) eines Luftfahrzeugs mit einem Außengehäuse (11), das sich in einer Längsrichtung (X) zwischen einer Lufteinlassöffnung (12) und einer Ausstoßdüse (13) erstreckt, einer Turbomaschine (14) mit einem Turbomaschinengehäuse (15), das im Inneren des Außengehäuses (11) durch Gleichrichterarme (16) befestigt ist, einem Gebläse (17), das auf der Höhe der Lufteinlassöffnung (12) des Außengehäuses stromaufwärts der Turbomaschine (14) angeordnet und ausgestaltet ist, einen Primärluftstrom, der die Turbomaschine versorgt, und einen Sekundärluftstrom, der einen Kanal, den sogenannten Sekundärkanal (18), versorgt, der zwischen dem Außengehäuse (11) und dem Turbomaschinengehäuse (15) ausgebildet ist, erzeugen zu können, **dadurch gekennzeichnet, dass** er zudem einen Fluidkreislauf (20) nach einem der Ansprüche 1 bis 5 umfasst.

7. Luftfahrzeug mit mindestens einem Antriebsmotor, **dadurch gekennzeichnet, dass** der Antriebsmotor ein Motor nach Anspruch 6 ist.

8. Verfahren zum Kühlen und/oder Schmieren eines Fluids eines Schmier- oder Kühlkreislaufs nach Anspruch 1, der als Fluidkreislauf (20) bezeichnet wird, eines Bauteils (42) eines Triebwerks (10) eines Luftfahrzeugs mit einem Außengehäuse (11), das sich in einer Längsrichtung (X) zwischen einer Lufteintrittsöffnung (12) und einer Ausstoßdüse (13) erstreckt, einer Turbomaschine (14) mit einem Turbomaschinengehäuse (15), das im Inneren des Außengehäuses (11) durch Gleichrichterarme (16) befestigt ist, und ein Gebläse (17), das an der Lufteinlassöffnung (12) des Außengehäuses (11) stromaufwärts der Turbomaschine (14) angeordnet und ausgestaltet ist, einen Primärluftstrom, der die Turbomaschine speist, und einen Sekundärluftstrom, der einen Kanal, den sogenannten Sekundärkanal (18), speist, der zwischen dem äußeren Gehäuse (11) und dem Turbomaschinengehäuse (15) ausgebildet ist, zu erzeugen,
**dadurch gekennzeichnet, dass** das Verfahren umfasst:
Anordnen des Hauttauschers (30) des Fluidkreislaufs (20) an einer Innenwand des Außengehäuses (11), in Längsrichtung zwischen dem Gebläse (17) und den Gleichrichterarmen (16),
Herstellen einer Fluidverbindung des Hauttauschers (30) mit dem Fluidkreislauf (20), um einen Wärmeaustausch zwischen dem Fluid des Fluidkreislaufs (20) und der in dem Sekundärkanal (18) zirkulierenden Luft gewährleisten zu können.

9. Verfahren nach Anspruch 8, **dadurch gekennzeichnet, dass** der Schritt des Anordnens des Hauttauschers an der Innenwand des Außengehäuses darin besteht, den Hauttauscher über den gesamten Umfang der Innenwand des Außengehäuses anzuordnen.

## Claims

1. System for cooling a fluid of a circuit, referred to as a fluid circuit (20), for lubricating or cooling at least one component (42) of a propulsion engine (10) of an aircraft, the engine comprising an outer casing (11) which extends in a longitudinal direction (X) between an air inlet opening (12) and an ejection nozzle (13), a turbomachine (14) having a turbomachine casing (15) secured inside said outer casing (11) by rectifier arms (16), and a fan (17) arranged at said air inlet opening (12) of said outer casing (11), upstream of said turbomachine (14), and designed to be able to generate a primary air flow feeding said turbomachine (14) and a secondary air flow feeding a channel, referred to as a secondary channel (18), formed between said outer casing (11) and said turbomachine casing (15), **characterized in that** said cooling system comprises :
- a lubricating or cooling fluid reservoir (22);
- a plurality of components (42) of said engine to be lubricated and/or cooled; and
- at least one fluid flow pipe (23) connecting said fluid reservoir (22) and said plurality of components (42) of said engine to be lubricated and/or cooled,
- a cooling system of said fluid comprising a smooth heat exchanger, referred to as a skin exchanger (30), formed from two metal sheets (31, 32) facing one another and defining between them channels (33) for the circulation of the said fluid, one of which sheets, referred to as the interface sheet, is intended to extend over the periphery of the inner wall of the outer casing (11) so that the said skin exchanger does not comprise any fins immersed in the said secondary air flow and is configured to be arranged on an inner wall of said outer casing, said skin exchanger (30) being in fluid communication with said fluid circuit (20) and designed to be able to provide heat exchanges between said fluid of said fluid circuit (20) and the air flowing through said secondary channel (18), the fluid circuit (20) being **characterized in that** the exchanger (30) is configured to be longitudinally arranged between said fan (17) and the said rectifier arms (16).

2. Fluid circuit (20) according to claim 1, **characterized in that** said skin exchanger (30) of said cooling system is curved.

3. Fluid circuit (20) according to either claim 1 or claim 2, **characterized in that** said skin exchanger (30) extends over the entire circumference of said inner wall of said outer casing (11).

4. Fluid circuit (20) according to any of claims 1 to 3, **characterized in that** said fluid circuit (20) is a lubrication circuit, said fluid is a lubricating oil and said skin exchanger (30) comprises flow channels (33) for this lubricating oil.

5. System according to any of claims 1 to 3, **characterized in that** said fluid circuit (20) is a cooling circuit, said fluid is a cooling fluid and said skin exchanger (30) comprises flow channels for this cooling fluid.

6. Propulsion engine (10) of an aircraft, comprising an outer casing (11) which extends in a longitudinal direction (X) between an air inlet opening (12) and an ejection nozzle (13), a turbomachine (14) having a turbomachine casing (15) secured inside said outer casing (11) by rectifier arms (16), a fan (17) arranged at said air inlet opening (12) of said outer casing, upstream of said turbomachine (14), and designed to be able to generate a primary air flow feeding said turbomachine and a secondary air flow feeding a channel, referred to as a secondary channel (18), formed between said outer casing (11) and said turbomachine (14) casing (15), **characterized in that** said engine further comprises a fluid circuit (20) according to any of claims 1 to 5.

7. Aircraft comprising at least one propulsion engine, **characterized in that** said propulsion engine is an engine according to claim 6.

8. Method for cooling and/or lubricating a fluid of a circuit, according to claim 1, referred to as a fluid circuit (20), for lubricating or cooling a component (42) of a propulsion engine (10) of an aircraft, the engine comprising an outer casing (11) which extends in a longitudinal direction (X) between an air inlet opening (12) and an ejection nozzle (13), a turbomachine (14) having a turbomachine casing (15) secured inside said outer casing (11) by rectifier arms (16), and a fan (17) arranged at said air inlet opening (12) of said outer casing (11), upstream of said turbomachine (14), and designed to be able to generate a primary air flow feeding said turbomachine and a secondary air flow feeding a channel, referred to as a secondary channel (18), formed between said outer casing (11) and said turbomachine casing (15),
**characterized in that** said method comprises:
- arranging of the skin exchanger (30) of said fluid circuit (20) on an inner wall of said outer casing (11), longitudinally between said fan (17) and said rectifier arms (16); and
- placing said skin exchanger (30) in fluid communication with said fluid circuit (20) in order to be able to provide heat exchanges between said fluid of the fluid circuit (20) and the air flowing through said secondary channel (18).

9. Method according to claim 8, **characterized in that** said step of arranging the skin exchanger on the inner wall of said outer casing involves arranging said skin exchanger over the entire circumference of said inner wall of said outer casing.
